# EUROPEAN PATENT SPECIFICATION

(11) **EP 3 412 153 B1**
(45) Date of publication and mention of the grant of the patent: **29.07.2020**
(21) Application number: 16889323.8
(22) Date of filing: 25.03.2016
(51) Int. Cl.: A23G 1/00, A23G 1/30, A23G 1/32, C11B 3/00

(54) **COCOA BUTTER**
KAKAOBUTTER
BEURRE DE CACAO

(30) Priority: 03.02.2016 JP 2016019039
(43) Date of publication of application: 12.12.2018
(73) Proprietor: Fuji Oil Holdings Inc., Osaka 598-8540 (JP)
(72) Inventor: MIZUSHIMA, Shigeki, Tsukubamirai-shi Ibaraki 300-2436 (JP)
(74) Representative: Ter Meer Steinmeister & Partner
(86) International application number: PCT/JP2016/059703
(87) International publication number: WO 2017/134839

(56) References cited:
- EP-A1- 1 649 756
- JP-A- H02 153 997
- JP-A- H11 131 089
- JP-A- 2005 290 308
- JP-A- 2007 531 516
- US-B2- 8 557 551

## Description

### [Technical Field]

The present invention relates to imparting photodegradation resistance to cocoa butter.

### [Background Art]

Cocoa butter is a relatively stable oil. However, depending on a mode of use, when it is exposed to strong light, the flavor may deteriorate.

Patent Literature 1 describes that "when white chocolate is exposed to light, components vary due to the energy of the emitted light, and an offensive taste occurs and a value of products is remarkably lowered, but a method of addressing such problems is considered to be very difficult for those skilled in the related art, and the reason for this is inferred to be due to a milk component which is a component in the white chocolate," and that "purified hard butter with a Y value of 20 or less in a Lovibond colorimeter is used" in order to address such problems.

Patent Literature 2 describes a method of producing deodorized cocoa butter including performing an organic acid treatment on cocoa butter, performing bleaching in the presence of an organic acid, and then performing deodorization. Then, it is described that there are effects such as flavor degradation over time being suppressed.

Patent Literature 3 describes a degumming method using phospholipase A1 and/or A2, but its object is to provide efficient degumming.

Here, Patent Literature 4 describes a method of purifying an oil using the phospholipase A1.

Patent Literature 5 relates to a cocoa product which improves wettability in powdered beverages and which has a reduced content of phospholipids. The process for its manufacture involves subjecting a moisturized cocoa liquor to a diacylation treatment. The diacylation treatment is carried out in the presence of an enzyme, for example phospholipase A1.

Patent Literature 6 discloses methods for making or modifying oils that are low in a particular fatty acid content. Among these methods processes for modifying cocoa butters using an enzyme of the invention are provided in order to obtain cocoa butter alternatives. A regio-selective lipase or esterase is suggested for use in the latter processes

EP1649756 relates to a cocoa product which improves wettability in powdered beverages and which has a reduced content of phospholipids.

US8557551 discloses methods for making or modifying oils that are low in a particular fatty acid content.

### [Citation List]

### [Patent Literature]

[Patent Literature 1]
   Japanese Unexamined Patent Application Publication No. 2006-197830
[Patent Literature 2]
   Japanese Unexamined Patent Application Publication No. 2005-245313
[Patent Literature 3]
   Japanese Unexamined Patent Application Publication No. H11-228986
[Patent Literature 4]
   Japanese Unexamined Patent Application Publication No. H11-131089
[Patent Literature 5]
   EP 1 649 756 A1
[Patent Literature 6]
   US 8 557 551 A

### [Summary of Invention]

### [Technical Problem]

In the method of Patent Literature 1, use of a hard butter other than cocoa butter is proposed, but this method has not become a standard for imparting photodegradation resistance when cocoa butter is used.

In Patent Literature 2, there is a need to deodorize an oil, which is complicated. Patent Literature 3 and 4 describe methods of purifying oils that use phospholipases A1 to A2. However, there is no description that such purification is effective for imparting photodegradation resistance to cocoa butter.

The inventors conducted further studies, and found that, when phospholipase acts on cocoa butter and a degumming treatment is performed, the obtained cocoa butter has photodegradation resistance, thereby completing the present invention.

The present invention is defined by the claims and relates to a method of imparting photodegradation resistance to cocoa butter comprising degumming by causing phospholipase to act on cocoa butter. In one embodiment the phospholipase is phospholipase A2.

In one embodiment an amount of the phospholipase A2 used is 500 to 200,000 IU with respect to 1 kg of cocoa butter is used.

In one embodiment the phospholipase is phospholipase A1.

In one embodiment an amount of the phospholipase A1 used is 500 to 200,000 IU with respect to 1 kg of cocoa butter is used. The present invention also relates to a chocolate-like food having photodegradation resistance, which contains cocoa butter that is degummed by an action of phospholipase thereon as the cocoa butter, and contains no cacao component among non-oil components.

In one embodiment phospholipase is phospholipase A2.

In one embodiment the phospholipase is phospholipase A1.

The present invention also relates to a method of producing the chocolate-like food having photodegradation resistance according to (19), including using cocoa butter that is degummed by an action of phospholipase thereon as the cocoa butter, wherein a non-oil component does not contain a cacao component.

### [Advantageous Effects of Invention]

According to the present invention, it is possible to impart photodegradation resistance to cocoa butter with a simple method.

### [Description of Embodiments]

Cocoa butter referred to in the present invention is the fat content of cacao beans. Generally, unpurified products are distributed in many cases, but purified products are also distributed in some cases. In the present invention, regardless of whether products are purified or not, commercially available cocoa butter can be appropriately used.

Phospholipases referred to in the present invention are enzymes that act on phospholipids. There are phospholipases A1, A2, B, C, and D according to acting portions. However, in the present invention, any phospholipase can be used. Among them, desirably, the phospholipases A2, A1, and D are used, and particularly, the phospholipase A2 is preferably used. When an appropriate phospholipase is used, an effect of imparting photodegradation resistance is significantly exhibited.

In the present invention, the activities of phospholipases are defined as follows.

### The activity (unit: IU) of the phospholipases A2 and A1 is determined as follows.

Free fatty acids produced when a substrate of soybean lecithin is hydrolyzed are quantified using a commercially available Free Fatty Acid Quantification Assay Kit-Determiner NEFA755 (commercially available from Kyowa Medex Co., Ltd.). Then, an amount of an enzyme that releases 1 µmol of fatty acids over 1 minute is set as 1 U.

### The activity (unit: IU) of the phospholipase D is determined as follows.

Choline produced when a substrate of phosphatidylcholine is hydrolyzed is quantified using a commercially available cholinesterase kit-NC (289-75181 commercially available from Wako Pure Chemical Industries, Ltd.). Here, the produced choline produces a red quinone dye with a choline oxidase, a peroxidase, and the like in the kit. Then, an amount of an enzyme that releases 1 µmol of choline over 1 minute is set as 1 U.

In the present invention, although an amount of phospholipase used is not unconditionally determined because it varies according to setting of a reaction temperature and a reaction time, when a case in which phospholipase is used with general degumming conditions is assumed, an amount of phospholipase used is desirably 500 to 200,000 IU, more desirably 1,000 to 100,000 IU, and most desirably 5,000 to 50,000 IU with respect to 1 kg of cocoa butter. When an appropriate amount of phospholipase is used, an effect of imparting photodegradation resistance is significantly exhibited.

In the present invention, degumming is a process of removing phospholipids contained in vegetable oils. Since phospholipids are generally contained in vegetable oils, when phospholipids are removed by degumming, there is an effect of improving a quality of oil. Generally, degumming is performed by adding hot water to a crude oil, stirring the mixture, and then centrifuging the mixture in many cases. In addition, the phospholipases A1 to A2 may be used.

According to the present invention, degumming using phospholipase can be performed by a conventional method. That is, degumming is performed such that phospholipase suspended in water is added to a melted oil and stirred and is left at a predetermined temperature, and then that with a gum quality is then centrifuged off. Here, it is possible to appropriately adjust a pH in consideration of an optimum pH of an enzyme and a stable pH range. In addition, in order to block metal ions, a citric acid treatment may be performed in combination.

The photodegradation resistance referred to in the present invention refers to resistance to degradation that occurs over time when light is emitted and is generally perceived as an unusual odor or unusual flavor. A specific method of evaluating photodegradation resistance is described in examples.

According to the present invention, when cocoa butter that is subjected to degumming using phospholipase is used, it is possible to obtain a chocolate-like food having photodegradation resistance. Here, desirably, the chocolate-like food is a food that does not contain a cacao component as a component other than an oil (referred to as a non-oil component). This is because food containing a cacao component among non-oil components, that is, a so-called black chocolate, has a certain level of resistance to photodegradation. Since a chocolate-like food containing no cacao component among non-oil components, that is, a white chocolate, has low resistance to photodegradation, an effect according to the present invention is significantly exhibited. Therefore, this is more preferable in application of the present invention.

Examples will be described below.

### Examples

### Examination 1 Treatment of cocoa butter using the phospholipase A2

As shown in Table 1, a degumming treatment was performed while an amount of the phospholipase A2 was changed. As a method, "o Degumming method using phospholipase A2 treatment on cocoa butter" described below was performed. Here, in Examination Example 1, a treatment was performed in the same manner as in the "o Degumming method using phospholipase A2 treatment on cocoa butter" except that no phospholipase A2 was added. In addition, in Examination Example 2, a treatment was performed by a general chemical degumming method.

"Cocoa butter DF200" (commercially available from Barry Callebaut Cocoa Asia Pacific Pte Ltd) was used as cocoa butter. This product was unpurified cocoa butter that was squeezed and extracted from cacao beans.

**Table 1 Concentration of phospholipase A2**

| | Examination Example 1 | Examination Example 2 | Examination Example 3 | Examination Example 4 | Examination Example 5 |
|---|---|---|---|---|---|
| Concentration of phospholipase A2 in phospholipase A2 suspension (weight%) | - | - | 0.10% | 1.00% | 10.00% |
| Activity of phospholipase A2 in phospholipase A2 suspension (IU/g) | - | - | 100 | 1,000 | 10,000 |
| Concentration of phospholipase A2 suspension or water in oil (weight%) | 1.0% | 1.0% | 1.0% | 1.0% | 1.0% |
| Concentration of phospholipase A2 in oil (weight%) | - | - | 0.001% | 0.01% | 0.10% |
| Activity of phospholipase A2 in oil (IU/kg) | - | - | 1,000 | 10,000 | 100,000 |

| | | | | | |
|---|---|---|---|---|---|
| "PLA2 Nagase 10 P/R" (commercially available from Nagase ChemteX Corporation) was used as the phospholipase A2. An activity value was 100,000 IU/g. | | | | | |

### ∘ Degumming method using phospholipase A2 treatment on cocoa butter

1. Cocoa butter was melted at 65 to 70 °C.
2. 0.144% of a 45 weight% citric acid aqueous solution was mixed in with respect to cocoa butter.
3. The mixture was stirred using a HOMOMIXER (commercially available from PRIMIX Corporation) at 3,000 rpm for 30 minutes.
4. An oil temperature was set to 50 to 55 °C.
5. A 4% aqueous sodium hydroxide solution was mixed in and a pH was set to 7.0 to 7.5.
6. A 1 weight% phospholipase A2 suspension with a predetermined concentration was mixed thereinto.
7. The mixture was stirred at an oil temperature of 50 to 55 °C using a HOMOMIXER at 3,000 rpm for 60 minutes.
8. The mixture was centrifuged (2,000 g×10 minutes) and the bottom layer was removed.
9. The oil temperature was set to 65 to 70 °C.
10. 20 weight% of hot water with a temperature of 70 °C was mixed in and the mixture was stirred using a HOMOMIXER at 3,000 rpm for 3 minutes.
11. The mixture was centrifuged (2,000 g×10 minutes) and the bottom layer was removed.
12. Dehydration and deactivation of an enzyme were performed at 110 °C for 10 minutes at 5 mmHg.

### ∘ Preparation of Examination Example 2 according to a general chemical degumming method of cocoa butter.

1. Cocoa butter was melted at 75 °C.
2. 0.1% of a 75 weight% aqueous phosphoric acid solution was mixed in with respect to cocoa butter and 2% of hot water with a temperature of 75 °C was mixed in with respect to cocoa butter.
3. The mixture was stirred using a HOMOMIXER (commercially available from PRIMIX Corporation) at 5,000 rpm for 3 minutes.
4. The mixture was centrifuged (2,000 g×10 minutes) and the bottom layer was removed.
5. 20 weight% of hot water with a temperature of 75 °C was mixed in and the mixture was stirred using a HOMOMIXER at 3,000 rpm for 3 minutes.
6. The mixture was centrifuged (2,000 g×10 minutes) and the bottom layer was removed.
7. Dehydration was performed at 110 °C for 10 minutes at 5 mmHg to obtain an oil of Examination Example 2.

### Examination 2 Treatment of cocoa butter using the phospholipase A1

As shown in Table 2, a degumming treatment was performed while an amount of the phospholipase A1 was changed. As a method, "○ Degumming method using phospholipase A1 treatment on cocoa butter" described below was performed.

"Cocoa butter DF200" (commercially available from Barry Callebaut Cocoa Asia Pacific Pte Ltd.) was used as cocoa butter. This product was unpurified cocoa butter that was squeezed and extracted from cacao beans.

**Table 2 Concentration of phospholipase A1**

| | Examination Example 6 | Examination Example 7 |
|---|---|---|
| Concentration of phospholipase A1 in phospholipase A1 suspension (weight%) | 1.00% | 10.00% |
| Activity of phospholipase A1 in phospholipase A1 suspension (IU/g) | 100 | 1,000 |
| Concentration of phospholipase A1 suspension in oil (weight%) | 1.0% | 1.0% |
| Concentration of phospholipase A1 in oil (weight%) | 0.01% | 0.10% |
| Activity of phospholipase A1 in oil (IU/kg) | 1,000 | 10,000 |

"Phospholipase A1" (commercially available from Mitsubishi-Chemical Foods Corporation) was used as the phospholipase A1. An activity value was 10,000 IU/g.

### ∘ Degumming method using phospholipase A1 treatment on cocoa butter

1. Cocoa butter was melted at 65 to 70 °C.
2. 0.144% of a 45 weight% citric acid aqueous solution was mixed in with respect to cocoa butter.
3. The mixture was stirred using a HOMOMIXER (commercially available from PRIMIX Corporation) at 3,000 rpm for 30 minutes.
4. An oil temperature was set to 50 to 55 °C.
5. A 4% aqueous sodium hydroxide solution was mixed in and a pH was set to 4.5 to 5.0.
6. A 1 weight% phospholipase A1 suspension with a predetermined concentration was mixed thereinto.
7. The mixture was stirred at an oil temperature of 50 to 55 °C using a HOMOMIXER at 3,000 rpm for 60 minutes.
8. The mixture was centrifuged (2,000 g×10 minutes) and the bottom layer was removed.
9. The oil temperature was set to 65 to 70 °C.
10. 20 weight% of hot water with a temperature of 70 °C was mixed in and the mixture was stirred using a HOMOMIXER at 3,000 rpm for 3 minutes.
11. The mixture was centrifuged (2,000 g×10 minutes) and the bottom layer was removed.
12. Dehydration and deactivation of an enzyme were performed at 110 °C for 10 minutes at 5 mmHg.

As shown in Table 2, a degumming treatment was performed while an amount of the phospholipase A1 was changed. As a method, "○ Degumming method using phospholipase A1 treatment on cocoa butter" described below was performed.

"Cocoa butter DF200" (commercially available from Barry Callebaut Cocoa Asia Pacific Pte Ltd.) was used as cocoa butter. This product was unpurified cocoa butter that was squeezed and extracted from cacao beans.

### Examination 3 Treatment of cocoa butter using the phospholipase D

As shown in Table 3, a degumming treatment was performed while an amount of the phospholipase D was changed. As a method, "○ Degumming method using phospholipase D treatment on cocoa butter" described below was performed.

"Cocoa butter DF200" (commercially available from Barry Callebaut Cocoa Asia Pacific Pte Ltd.) was used as cocoa butter. This product was unpurified cocoa butter that was squeezed and extracted from cacao beans.

**Table 3 Concentration of phospholipase D**

| | Examination Example 8 | Examination Example 9 |
|---|---|---|
| Concentration of phospholipase D in phospholipase D suspension (weight%) | 0.20% | 2.00% |
| Activity of phospholipase D in phospholipase D suspension (IU/g) | 100 | 1,000 |
| Concentration of phospholipase D suspension in oil (weight%) | 1.0% | 1.0% |
| Concentration of phospholipase D in oil (weight%) | 0.002% | 0.02% |
| Activity of phospholipase D in oil (IU/kg) | 1,000 | 10,000 |

| | | |
|---|---|---|
| "Phospholipase D from Streptomyces Chromofuscus" (commercially available from SIGMA-ALDRICH) was used as the phospholipase D. An activity value was 50,000 IU/g. | | |

### ∘ Degumming method using phospholipase D treatment on cocoa butter

1. Cocoa butter was melted at 65 to 70 °C.
2. 0.144% of a 45 weight% citric acid aqueous solution was mixed in with respect to cocoa butter.
3. The mixture was stirred using a HOMOMIXER (commercially available from PRIMIX Corporation) at 3,000 rpm for 30 minutes.
4. An oil temperature was set to 50 to 55 °C.
5. A 4% aqueous sodium hydroxide solution was mixed in and a pH was set to 7.0 to 7.5.
6. A 1 weight% phospholipase D suspension with a predetermined concentration was mixed thereinto.
7. The mixture was stirred at an oil temperature of 50 to 55 °C using a HOMOMIXER at 3,000 rpm for 60 minutes.
8. The mixture was centrifuged (2,000 g×10 minutes) and the bottom layer was removed.
9. The oil temperature was set to 65 to 70 °C.
10. 20 weight% of hot water with a temperature of 70 °C was mixed in and the mixture was stirred using a HOMOMIXER at 3,000 rpm for 3 minutes.
11. The mixture was centrifuged (2,000 g×10 minutes) and the bottom layer was removed.
12. Dehydration and deactivation of an enzyme were performed at 110 °C for 10 minutes at 5 mmHg.

### Examination 4 preparation of chocolate-like food

Chocolate-like foods were prepared according to formulations in Table 4, which contained the oil prepared in Examination 1 and other oils.

As a preparation method, "○ Method of preparing a chocolate-like food" described below was performed. Then, an acceleration test of photodegradation was performed according to "○ Photodegradation acceleration test method." Sensory evaluation of the obtained sample was performed according to "○ Sensory evaluation method of a chocolate-like food" described below. The results are shown in Table 5.

**Table 4 Formulation of chocolate-like food**

| | Comparative Example 1 | Comparative Example 2 | Comparative Example 3 | Comparative Example 4 | Example 1 | Example 2 | Example 3 | Example 4 | Example 5 | Example 6 | Example 7 |
|---|---|---|---|---|---|---|---|---|---|---|---|
| Oil 1 | 28.0 | - | - | - | - | - | - | - | - | - | - |
| Oil 2 | - | 28.0 | - | - | - | - | - | - | - | - | - |
| Oil of Examination Example 1 | - | - | 28.0 | - | - | - | - | - | - | - | - |
| Oil of Examination Example 2 | - | - | - | 28.0 | - | - | - | - | - | - | - |
| Oil of Examination Example 3 | - | - | - | - | 28.0 | - | - | - | - | - | - |
| Oil of Examination Example 4 | - | - | - | - | - | 28.0 | - | - | - | - | - |
| Oil of Examination Example 5 | - | - | - | - | - | - | 28.0 | - | - | - | - |
| Oil of Examination Example 6 | - | - | - | - | - | - | - | 28.0 | - | - | - |
| Oil of Examination Example 7 | - | - | - | - | - | - | - | - | 28.0 | - | - |
| Oil of Examination Example 8 | - | - | - | - | - | - | - | - | - | 28.0 | - |
| Oil of Examination Example 9 | - | - | - | - | - | - | - | - | - | - | 28.0 |
| Sugar | 43.5 | 43.5 | 43.5 | 43.5 | 43.5 | 43.5 | 43.5 | 43.5 | 43.5 | 43.5 | 43.5 |
| Whole milk powder | 28.0 | 28.0 | 28.0 | 28.0 | 28.0 | 28.0 | 28.0 | 28.0 | 28.0 | 28.0 | 28.0 |
| Lecithin | 0.5 | 0.5 | 0.5 | 0.5 | 0.5 | 0.5 | 0.5 | 0.5 | 0.5 | 0.5 | 0.5 |
| Sum | 100.0 | 100.0 | 100.0 | 100.0 | 100.0 | 100.0 | 100.0 | 100.0 | 100.0 | 100.0 | 100.0 |

| | | | | | | | | | | | |
|---|---|---|---|---|---|---|---|---|---|---|---|
| (unit is weight%) • NEWSS7" (commercially available from Fuji Oil Co., Ltd.) was used as an oil 1. This product is cocoa butter equivalents (CBE). • Cocoa butter used in Examination 1 was directly used as an oil 2. | | | | | | | | | | | |

### ∘ Method of preparing chocolate-like food

1. An oil, sugar, and whole milk powder were mixed, and crushed using a roller.
2. Lecithin was added.
3. Conching was performed at 60 °C for 2 hours.
4. The temperature was adjusted to 30 °C, and "Chocolate Seed A" (commercially available from Fuji Oil Co., Ltd.) was added at 0.2% with respect to chocolate, and seed tempering was performed.
5. The mixture was filled into a PC chocolate mold No. 81 (38 mm×38 mm×3 mm: oil 3.5 g, chocolate 4.2 g), and solidified at 10 °C for 30 minutes.

### "○ Photodegradation acceleration test method"

1. A chocolate-like food sample was put into a polyethylene bag and left at 23 °C and 1,000 lx.
2. Sampling was performed every day for 3 days. Each sample was kept in a cool and dark place so that photodegradation did not proceed any further.

### ∘ Sensory evaluation method of chocolate-like food

7 trained panelists performed sensory evaluation using samples which were photodegraded in the "○ Photodegradation acceleration test method" and a control sample. Evaluation criteria were as follows, and results were scored according to consultation among the panelists.

On the 3rd day in the acceleration test, three points or more was determined to be satisfactory.
5 points Evaluated as the same as the control.
4 points Flavor was slightly inferior to the control, but was only slightly different.
3 points Flavor was inferior to the control, but was in an acceptable range.
2 points Flavor was obviously inferior to the control and was unacceptable.
1 point Flavor was greatly inferior to the control and was unacceptable.

On the 3rd day in the acceleration test, three or more points was determined to be satisfactory.

**Table 5 Results**

| | Comparative Example 1 | Comparative Example 2 | Comparative Example 3 | Comparative Example 4 | Example 1 | Example 2 | Example 3 | Example 4 | Example 5 | Example 6 | Example 7 |
|---|---|---|---|---|---|---|---|---|---|---|---|
| Immediately after preparation | 5 | 5 | 5 | 5 | 5 | 5 | 5 | 5 | 5 | 5 | 5 |
| 1^{st} day | 5 | 2 | 2 | 3 | 4 | 5 | 5 | 4 | 5 | 3 | 4 |
| 2^{nd} day | 4 | 1 | 2 | 2 | 3 | 4 | 4 | 3 | 4 | 3 | 3 |
| 3^{rd} day | 4 | 1 | 1 | 1 | 3 | 4 | 4 | 3 | 3 | 3 | 3 |

### Consideration

Comparative Example 1 was a chocolate-like food containing no cocoa butter, and had photodegradation resistance.

In all of Comparative Example 2 in which commercially available cocoa butter was used, Comparative Example 3 in which cocoa butter subjected to the same treatment as in Examination Examples 2 to 5 except for phospholipase treatment was used, and Comparative Example 4 in which a general degumming treatment was performed, flavor decreased over time, and all failed.

In Examples 1 to 7 in which cocoa butter subjected to phospholipase treatment was used, flavor decreased constantly over time, but all were determined to be satisfactory. Based on the results, it can be clearly understood that photodegradation resistance can be imparted by performing phospholipase treatment on cocoa butter.

## Claims

1. A method of imparting photodegradation resistance to cocoa butter comprising:
degumming by causing phospholipase to act on cocoa butter.

2. The method of imparting photodegradation resistance to cocoa butter according to claim 1, wherein the phospholipase is phospholipase A2.

3. The method of imparting photodegradation resistance to cocoa butter according to claim 2, wherein an amount of the phospholipase A2 used is 500 to 200,000 IU with respect to 1 kg of cocoa butter.

4. The method of imparting photodegradation resistance to cocoa butter according to claim 1, wherein the phospholipase is phospholipase A1.

5. The method of imparting photodegradation resistance to cocoa butter according to claim 4, wherein an amount of the phospholipase A1 used is 500 to 200,000 IU with respect to 1 kg of cocoa butter.

6. A chocolate-like food having photodegradation resistance, comprising cocoa butter that is degummed by an action of phospholipase thereon as the cocoa butter, and contains no cacao component among non-oil components.

7. The chocolate-like food having photodegradation resistance according to claim 6, wherein the phospholipase is phospholipase A2.

8. The chocolate-like food having photodegradation resistance according to claim 6, wherein the phospholipase is phospholipase A1.

9. A method of producing the chocolate-like food having photodegradation resistance according to claim 6, comprising: using cocoa butter that is degummed by an action of phospholipase thereon as the cocoa butter, wherein a non-oil component does not contain a cacao component.

## Patentansprüche

1. Verfahren zum Verleihen einer Widerstandsfähigkeit gegenüber einem fotooxidativen Abbau bei Kakaobutter, wobei das Verfahren den folgenden Schritt umfasst:
Degummieren, indem bewirkt wird, dass Phospholipase auf Kakaobutter wirkt.

2. Verfahren zum Verleihen einer Widerstandsfähigkeit gegenüber einem fotooxidativen Abbau bei Kakaobutter nach Anspruch 1, wobei die Phospholipase eine Phospholipase A2 ist.

3. Verfahren zum Verleihen einer Widerstandsfähigkeit gegenüber einem fotooxidativen Abbau bei Kakaobutter nach Anspruch 2, wobei eine Menge der Phospholipase A2, die verwendet wird, 500 bis 200000 IU in Bezug auf 1 kg Kakaobutter umfasst.

4. Verfahren zum Verleihen einer Widerstandsfähigkeit gegenüber einem fotooxidativen Abbau bei Kakaobutter nach Anspruch 1, wobei die Phospholipase eine Phospholipase A1 ist.

5. Verfahren zum Verleihen einer Widerstandsfähigkeit gegenüber einem fotooxidativen Abbau bei Kakaobutter nach Anspruch 4, wobei eine Menge der Phospholipase A1, die verwendet wird, 500 bis 200000 IU in Bezug auf 1 kg Kakaobutter umfasst.

6. Schokoladenartiges Lebensmittel, das eine Widerstandsfähigkeit gegenüber einem fotooxidativen Abbau aufweist, das Kakaobutter, die durch eine Wirkung von Phospholipase degummiert ist, als die Kakaobutter enthält, und das keinen Kakaobestandteil aus den nicht ölbasierten Bestandteilen enthält.

7. Schokoladenartiges Lebensmittel, das eine Widerstandsfähigkeit gegenüber einem fotooxidativen Abbau aufweist, nach Anspruch 6, wobei die Phospholipase eine Phospholipase A2 ist.

8. Schokoladenartiges Lebensmittel, das eine Widerstandsfähigkeit gegenüber einem fotooxidativen Abbau aufweist, nach Anspruch 6, wobei die Phospholipase eine Phospholipase A1 ist.

9. Verfahren zum Herstellen des schokoladenartigen Lebensmittels, das eine Widerstandsfähigkeit gegenüber einem fotooxidativen Abbau aufweist, nach Anspruch 6, wobei das Verfahren die folgenden Schritte umfasst: Verwenden von Kakaobutter, die durch eine Wirkung von Phospholipase degummiert ist, als die Kakaobutter, wobei ein nicht ölbasierter Bestandteil keinen Kakaobestandteil enthält.

## Revendications

1. Procédé pour conférer à du beurre de cacao une résistance à la photodégradation, comportant l'étape consistant à :
démucilaginer en amenant une phospholipase à agir sur le beurre de cacao.

2. Procédé pour conférer à du beurre de cacao une résistance à la photodégradation selon la revendication 1, dans lequel la phospholipase est une phospholipase A2.

3. Procédé pour conférer à du beurre de cacao une résistance à la photodégradation selon la revendication 2, dans lequel une quantité de la phospholipase A2 utilisée est de 500 à 200 000 IU par rapport à 1 kg de beurre de cacao.

4. Procédé pour conférer à du beurre de cacao une résistance à la photodégradation selon la revendication 1, dans lequel la phospholipase est une phospholipase A1.

5. Procédé pour conférer à du beurre de cacao une résistance à la photodégradation selon la revendication 4, dans lequel une quantité de la phospholipase A1 utilisée est de 500 à 200 000 IU par rapport à 1 kg de beurre de cacao.

6. Aliment analogue à du chocolat présentant une résistance à la photodégradation, comportant du beurre de cacao qui est démucilaginé par une action de la phospholipase sur celui-ci comme le beurre de cacao, et ne contient aucun composant de cacao parmi des composants non huileux.

7. Aliment analogue à du chocolat présentant une résistance à la photodégradation selon la revendication 6, dans lequel la phospholipase est une phospholipase A2.

8. Aliment analogue à du chocolat présentant une résistance à la photodégradation selon la revendication 6, dans lequel la phospholipase est une phospholipase A1.

9. Procédé pour produire l'aliment analogue à du chocolat présentant une résistance à la photodégradation selon la revendication 6, comportant l'étape consistant à : utiliser du beurre de cacao qui est démucilaginé par une action de la phospholipase sur celui-ci comme le beurre de cacao, dans lequel un composant non huileux ne contient pas un composant de cacao.
